# EUROPÄISCHE PATENTANMELDUNG

(11) **EP 4 209 844 A1**
(43) Veröffentlichungstag der Anmeldung: **12.07.2023**
(21) Anmeldenummer: 22150838.5
(22) Anmeldetag: 11.01.2022
(51) Int. Cl.: G05B 19/409

(54) **WERKZEUGMASCHINE MIT AUTOMATISCHER ANZEIGE VON BETRIEBSPARAMETERN**

(71) Anmelder: Hilti Aktiengesellschaft, 9494 Schaan (LI)
(72) Erfinder: Mayer, Stefan, 86857 Hurlach (DE); Hauser, Klaus, 86830 Schwabmünchen (DE); Beckert, Benedikt, 86830 Schwabmünchen (DE)
(74) Vertreter: Hilti Aktiengesellschaft Corporate Intellectual Property

(57) **Zusammenfassung**

Die vorliegende Erfindung betrifft ein System, das eine Werkzeugmaschine und eine Energieversorgungsvorrichtung umfasst. Das System umfasst mindestens eine Sensoreinheit zur Erfassung von mindestens einem Roh-Betriebsparameter des Systems, wobei der von der Sensoreinheit erfasste Roh-Betriebsparameter an eine Recheneinheit innerhalb des Systems übermittelt werden kann. Die Recheneinheit ist dazu eingerichtet, den Roh-Betriebsparameter dergestalt zu verarbeiten, dass ein aufbereiteter Betriebsparameter erhalten wird, der mit Hilfe einer Kommunikationsverbindung an eine Anzeigenvorrichtung des Systems übermittelt werden kann. Die Anzeigenvorrichtung ist dazu eingerichtet, den aufbereiteten Betriebsparameter automatisch und für einen Nutzer des Systems einsehbar anzuzeigen. In einem zweiten Aspekt betrifft die Erfindung ein Verfahren zur Ermittlung und Anzeige von mindestens einem aufbereiteten Betriebsparameter in einem solchen System.

## Beschreibung

Die vorliegende Erfindung betrifft ein System, das eine Werkzeugmaschine und eine Energieversorgungsvorrichtung umfasst. Das System umfasst mindestens eine Sensoreinheit zur Erfassung von mindestens einem Roh-Betriebsparameter des Systems, wobei der von der Sensoreinheit erfasste Roh-Betriebsparameter an eine Recheneinheit innerhalb des Systems übermittelt werden kann. Die Recheneinheit ist dazu eingerichtet, den Roh-Betriebsparameter dergestalt zu verarbeiten, dass ein aufbereiteter Betriebsparameter erhalten wird, der mit Hilfe einer Kommunikationsverbindung an eine Anzeigenvorrichtung des Systems übermittelt werden kann. Die Anzeigenvorrichtung ist dazu eingerichtet, den aufbereiteten Betriebsparameter automatisch und für einen Nutzer des Systems einsehbar anzuzeigen. In einem zweiten Aspekt betrifft die Erfindung ein Verfahren zur Ermittlung und Anzeige von mindestens einem aufbereiteten Betriebsparameter in einem solchen System.

### Hintergrund der Erfindung:

Im Bereich der akkubetriebenen Werkzeugmaschinen ist es bekannt, dass beispielsweise ein Füllstand einer Energieversorgungsvorrichtung angezeigt werden kann. Im Stand der Technik sind beispielsweise LED-Anzeigen bekannt, die den Füllstand der Energieversorgungsvorrichtung anzeigen können. Dabei können zum Beispiel drei LED-Leuchten vorgesehen sein, wobei das Leuchten von der drei LED-Leuchten einen hohen Füllstand der Energieversorgungsvorrichtung anzeigen kann und das Leuchten von nur einer LED-Leuchte einen niedrigen Füllstand der Energieversorgungsvorrichtung. Die LED-Leuchten können auch unterschiedliche Farben aufweisen.

Im Stand der Technik sind darüber hinaus Anzeigenvorrichtungen bekannt, auf denen Informationen angezeigt werden können. Diese Anzeige erfolgt häufig allerdings erst nach Betätigung eines Bedienelements durch einen Nutzer. In vielen Fällen muss sich der Nutzer auch durch ein umständliches Menü von verschiedenen Informationsebenen «hindurchklicken», um an die gewünschte Information zu gelangen. Dies ist mühsam für den Nutzer der Werkzeugmaschine und insbesondere nicht zweckmäßig, wenn die Werkzeugmaschine auf einer Baustelle unter Baustellenbedingungen (Staub, Wasser, Handschuhe) verwendet wird.

Die Aufgabe, die der vorliegenden Erfindung zugrunde liegt, besteht darin, die Nachteile und Mängel des Standes der Technik zu überwinden und ein Werkzeugmaschinensystem und ein Verfahren bereitzustellen, mit dem eine verbesserte Anzeigenmöglichkeit von Informationen für den Nutzer des Werkzeugmaschinensystems ermöglicht wird. Darüber hinaus soll die Handhabung des Werkzeugmaschinensystems erleichtert werden, so dass der Nutzer besonders einfach an relevante Informationen hinsichtlich des Betriebs des Werkzeugmaschinensystems gelangt. Das bereitzustellende System soll insbesondere auch unter Baustellenbedingungen verwendet werden können und robust gegenüber Widrigkeiten sein, die auf einer Baustelle auftreten können, wie Staub, Spritzwasser, Feuchtigkeit und dergleichen.

Die Aufgabe wird gelöst durch den Gegenstand der unabhängigen Ansprüche. Vorteilhafte Ausführungsformen zu dem Gegenstand der unabhängigen Ansprüche finden sich in den abhängigen Ansprüchen.

### Beschreibung der Erfindung:

Erfindungsgemäß ist ein System vorgesehen, das eine Werkzeugmaschine und eine Energieversorgungsvorrichtung umfasst. Das System umfasst mindestens eine Sensoreinheit zur Erfassung von mindestens einem Roh-Betriebsparameter des Systems, wobei der von der Sensoreinheit erfasste Roh-Betriebsparameter an eine Recheneinheit innerhalb des Systems übermittelbar ist. Die Recheneinheit ist dazu eingerichtet, den Roh-Betriebsparameter dergestalt zu verarbeiten, dass ein aufbereiteter Betriebsparameter erhalten wird, der mit Hilfe einer Kommunikationsverbindung an eine Anzeigenvorrichtung des Systems übermittelbar ist, wobei die Anzeigenvorrichtung dazu eingerichtet ist, den aufbereiteten Betriebsparameter automatisch und für einen Nutzer des Systems einsehbar anzuzeigen. Mit der Erfindung ist es vorteilhafterweise möglich, Betriebsdaten zwischen der Werkzeugmaschine und der Energieversorgungsvorrichtung auszutauschen und automatisch auf einer Anzeigenvorrichtung anzuzeigen. Es stellt einen besonderen Vorteil der Erfindung dar, dass die Anzeige des aufbereiteten Betriebsparameters automatisch, d.h. vorzugsweise ohne ein Zutun des Nutzers erfolgt. Vorteilhafterweise kann der aufbereitete Betriebsparameter ohne ein Zutun des Nutzers auf der Anzeigenvorrichtung angezeigt werden. Insbesondere entfällt durch die automatische Anzeige ein aufwändiges Bedienen des Systems, was insbesondere unter Baustellenbedingungen eine erhebliche Erleichterung für den Nutzer des Systems darstellt. Dieser Vorteil greift umso mehr, wenn auf der Baustelle Handschuhe getragen werden, wodurch eine Bedienung von Bedienelementen an einer Werkzeugmaschine oder einer Energieversorgungsvorrichtung deutlich erschwert wird. Das vorgeschlagene System kann im Sinne der Erfindung bevorzugt auch als «Werkzeugmaschinensystem» bezeichnet werden.

Es ist im Sinne der Erfindung bevorzugt, dass der aufbereitete Betriebsparameter in einem Sichtfeld des Nutzers angezeigt bzw. eingeblendet wird. Das kann beispielsweise dadurch erreicht werden, dass die Anzeigenvorrichtung Bestandteil eines externen Geräts ist, wie zum Beispiel einer Schutzbrille, die der Nutzer während der Arbeit mit der Werkzeugmaschine trägt. Der aufbereitete Betriebsparameter kann beispielsweise in einem Seitenbereich der Schutzbrille eingeblendet werden, so dass der Nutzer die entsprechende Information schnell, leicht und unkompliziert erfassen kann, ohne etwaige Bedienelemente zu betätigen oder die Arbeit zu unterbrechen. Die automatische Anzeige des aufbereiteten Betriebsparameters im Sichtfeld des Nutzers ist insbesondere dann besonders hilfreich, wenn es sich bei dem aufbereiteten Betriebsparameter um Informationen handelt, die den Nutzer bei der Durchführung einer Applikation unterstützen. Der Begriff «Applikation» wird im Sinne der Erfindung vorzugsweise für eine Arbeit verwendet, die mit der Werkzeugmaschine durchgeführt wird. Dabei kann es sich beispielsweise um das Einbringen eines Schnittes in einen Untergrund handeln oder um das Setzen von Nägeln oder Bolzen in einen Untergrund oder die Durchführung einer Kernbohrung, ohne darauf beschränkt zu sein. Für die Durchführungen solcher Applikationen können Informationen hilfreich sein, die beispielsweise eine Lage und/oder Position der Werkzeugmaschine in Bezug auf den zu bearbeitenden Untergrund angeben. Der Nutzer kann dann auf Grundlage der eingeblendeten und für ihn leicht zu erfassenden Informationen sein Nutzungsverhalten anpassen, indem er beispielsweise die Lage und/oder Position der Werkzeugmaschine verändert und für die durchzuführende Applikation optimiert. Die eingeblendete Information kann beispielsweise auch den Füll- oder Ladestand der Energieversorgungsvorrichtung betreffen. Beispielsweise kann eine zu erwartende Reichweite der in der Energieversorgungsvorrichtung verbliebenden Energie auf der Anzeigenvorrichtungen eingeblendet werden. Der Nutzer erfährt dadurch, wie viele Applikationen mit der Energieversorgungsvorrichtung durchgeführt werden können, bevor die Energieversorgungsvorrichtung ausgetauscht oder aufgeladen werden muss. Beispielsweise kann auf der Anzeigenvorrichtung angezeigt werden, dass noch drei, sieben oder fünfzehn Bolzen-Setzvorgänge möglich sind. Alternativ kann beispielsweise angezeigt werden, dass ein Bohrbetrieb noch für acht weitere Minuten möglich ist, wenn mit denselben Leistungsdaten weitergearbeitet wird wie zuvor. Die hier genannten Beispiele stellen vorzugsweise Ausführungsbeispiele dar für den aufbereiteten Betriebsparameter, der auf Grundlage der ermittelten Roh-Daten («Roh-Betriebsparameter») durch die Recheneinheit des Systems ermittelt werden kann.

Der aufbereitete Betriebsparameter kann beispielsweise ausgewählt sein aus einer Gruppe umfassend Ladezustand der Energieversorgungsvorrichtung, Gesundheitszustand der Energieversorgungsvorrichtung, Reichweite der Energieversorgungsvorrichtung, Anzahl der mit Energieversorgungsvorrichtung noch zu erledigenden Applikationen, thermische Reichweite der Energieversorgungsvorrichtung, Positions- oder Lageangaben zur Werkzeugmaschine, Stromverbrauch, Dauer einer Applikation, Anzahl der bisherigen Anwendungen und/oder Abweichung von einer vorgegebenen Lage oder Position. Selbstverständlich sind auch viele andere Informationen denkbar, die als aufbereiteter Betriebsparameter von der Recheneinheit des Systems ermittelt und von der Anzeigenvorrichtung angezeigt werden können.

Es ist im Sinne der Erfindung bevorzugt, dass die Recheneinheit einen Microcontroller umfasst oder von einem Microcontroller gebildet wird. Vorzugsweise kann sowohl die Werkzeugmaschine, als auch die Energieversorgungsvorrichtung eine Recheneinheit bzw. einen Microcontroller aufweisen. Beispielsweise sind die Recheneinheiten der Werkzeugmaschine und der Energieversorgungsvorrichtung dazu eingerichtet, untereinander zu kommunizieren; d.h. vorzugsweise besteht eine erste Kommunikationsverbindung zwischen den Recheneinheiten des Systems. Die Kommunikationsverbindung zwischen den Recheneinheiten der Werkzeugmaschine und der Energieversorgungsvorrichtung kann drahtgebunden oder drahtlos ausgebildet sein. Darüber hinaus kann jede Recheneinheit dazu eingerichtet sein, über eine zweite Kommunikationsverbindung mit einem externen Gerät zu kommunizieren, wobei diese zweite Kommunikationsverbindung vorzugsweise drahtlos ausgebildet ist. Es ist im Sinne der Erfindung besonders bevorzugt, dass diese zweite Kommunikationsverbindung zwischen einer Recheneinheiten der Werkzeugmaschine und/oder der Energieversorgungsvorrichtung mit einem Funkmodul hergestellt werden kann und auf Bluetooth basiert.

In einer bevorzugten Ausgestaltung der Erfindung kann die Erfindung dazu genutzt werden, Betriebsparameter der Energieversorgungsvorrichtung und der Werkzeugmaschine informationstechnologisch zusammenzuführen und zu einer kombinierten Anwenderinformation zu verarbeiten. Diese kombinierte Anwenderinformation kann dann auf der mindestens einen Anzeigenvorrichtung des Systems angezeigt werden. Zum Austausch und Sammeln der Daten kann vorzugsweise die Kommunikationsverbindung zwischen der Energieversorgungsvorrichtung und der Werkzeugmaschine verwendet werden. Die Auswertung, Zusammenführung und Verarbeitung der Daten erfolgt dann vorzugsweise in den Recheneinheiten des Systems, wobei das System beispielsweise eine oder zwei Recheneinheiten aufweisen kann. Wenn das System eine Recheneinheit aufweist, kann diese eine Recheneinheit an der Werkzeugmaschine oder an der Energieversorgungsvorrichtung angeordnet vorliegen. Wenn das System zwei Recheneinheiten aufweist, kann je eine Recheneinheit an der Werkzeugmaschine und an der Energieversorgungsvorrichtung angeordnet vorliegen. Beispielsweise kann ein Ladezustand der Energieversorgungsvorrichtung von der Energieversorgungsvorrichtung erfasst werden. Dieser Ladezustand kann beispielsweise mit einem Betriebsparameter kombiniert werden, der von der Werkzeugmaschine erfasst wird. Die Werkzeugmaschine kann beispielsweise einen Energieverbrauch für eine Applikation erfassen. Durch die Zusammenführung bzw. informationstechnologische Kombination dieser Informationen kann dann vorteilhafterweise die Anzahl der mit der Energieversorgungsvorrichtung noch durchzuführenden Applikationen ermittelt werden, bevor die Energieversorgungsvorrichtung aufgeladen, d.h. mit einem Ladegerät verbunden, werden muss.

Es ist im Sinne der Erfindung bevorzugt, dass das System Kommunikationsmodule aufweist, die es die Kommunikation zwischen Werkzeugmaschine und Energieversorgungsvorrichtung ermöglichen, sowie zwischen Werkzeugmaschine und externem Gerät, sowie zwischen Energieversorgungsvorrichtung und externem Gerät. Vorzugsweise weisen die Werkzeugmaschine, die Energieversorgungsvorrichtung und das externe Gerät mindestens je ein Kommunikationsmodul zur Herstellung einer Kommunikationsverbindung mit den jeweils anderen Systempartnern auf.

Es ist im Sinne der Erfindung bevorzugt, dass die Recheneinheit dazu eingerichtet ist, den Roh-Betriebsparameter so zu verarbeiten, dass der aufbereitete Betriebsparameter in einer grafischen Form und/oder für den Nutzer des Systems schnell erfassbar auf der Anzeigenvorrichtung anzeigbar ist. Die Ermittlung oder Anzeige des aufbereiteten Betriebsparameters in «grafischer Form» bedeutet im Sinne der Erfindung bevorzugt, dass anstatt einer Zahl eine grafische Darstellung ausgewählt wird, um beispielsweise einen Füllstand, eine Reichweite oder eine verbliebende Zeit in Relation zu setzen zu einen Ausgangs- oder Referenzwert. Wenn die Energieversorgungsvorrichtung zum Beispiel über einen Füllstand von 20 % verfügt, könnten beispielsweise zwei von fünf Balken angezeigt werden, um den Füllstand der Energieversorgungsvorrichtung besser zu verdeutlichen und für den Nutzer einfacher erfassbar zu machen. Die Angabe eines reinen Zahlenwerts kann für den Nutzer zuweilen verwirrend sein, weil eine reine Zahl ohne Kontext oft eine geringe Aussagekraft hat. Wenn beispielsweise eine Rest-Energie der Energieversorgungsvorrichtung von 20 Kilowattstunden angeben wird, ist diese Angabe weniger aussagekräftig als wenn beispielsweise eine grafische Darstellung bereitgestellt wird, die diesen Zahlenwert gleichzeitig in Relation setzt zum Fassungsvermögen der Energieversorgungsvorrichtung bzw. zum ursprünglichen Ladezustand der Energieversorgungsvorrichtung nach dem letzten Aufladevorgang. Wenn beispielsweise noch vier Bolzen-Setzvorgänge mit der Werkzeugmaschine möglich sind, bevor die Energieversorgungsvorrichtung ausgetauscht oder aufgeladen werden muss, können beispielsweise vier kleine Bolzen im Sichtfeld des Nutzers eingeblendet werden, um diese verbleibende Anzahl von Applikationen zu verdeutlichen. Der Nutzer kann dadurch den Fortgang seiner Arbeit mit der Werkzeugmaschine besser einschätzen und planen.

Insbesondere ermöglicht die Erfindung, Betriebsdaten zwischen der Werkzeugmaschine und der Energieversorgungsvorrichtung auszutauschen, miteinander zu kombinieren und/oder zu verarbeiten, so dass aus den Roh-Betriebsparametern aufbereitete Betriebsparameter erhalten werden. Selbstverständlich kann das vorgeschlagene Werkzeugmaschinensystem mehr als einen Roh-Betriebsparameter verarbeiten und mehr als einen aufbereiteten Betriebsparameter anzeigen. Es kann im Sinne der Erfindung auch bevorzugt sein, mehrere Roh-Betriebsparameter zu einem aufbereiteten Betriebsparameter zu verarbeiten. Dabei werden beispielsweise mehrere Roh-Betriebsparameter miteinander kombiniert und zum Beispiel zu einer grafisch anzeigbaren Information verarbeitet. Die Kombination und Aufbereitung von Roh-Daten zu aufbereiteten Daten stellt einen wesentlichen Vorteil der Erfindung dar, da der Nutzer auf diese Weise optimal bei der Durchführung einer Applikation unterstützt wird und dabei auf Informationen zurückgreifen kann, die ihm ohne technische Unterstützung, d.h. nur mit seinen eigenen Sinnen, nicht zugänglich wären.

Insbesondere kann das vorgeschlagene Werkzeugmaschinensystem auch mehr als eine Sensoreinheit aufweisen, um unterschiedliche Roh-Betriebsparameter zu erfassen. Dabei können beispielsweise elektrische Daten, wie Ströme, Spannungen oder dergleichen, und/oder thermische Daten, wie Temperaturen, erfasst werden. Es ist im Sinne der Erfindung bevorzugt, dass die Roh-Betriebsparameter im Wesentlichen kontinuierlich erfasst werden. Es kann aber im Sinne der Erfindung auch bevorzugt sein, dass die Roh-Betriebsparameter zeitlich beabstandet ermittelt werden, beispielsweise alle 10 Sekunden. In diesem Fall sind verschiedene Ermittlungsfrequenzen oder Meßraten denkbar. Es ist im Sinne der Erfindung bevorzugt, dass die aufbereiteten Betriebsparameter, die auf der Anzeigenvorrichtung eingeblendet werden, regelmäßig aktualisiert werden, wobei diese Aktualisierung vorzugsweise ohne ein Zutun des Nutzers, sondern bevorzugt automatisch erfolgt. Dabei kann die Aktualisierung im Wesentlichen kontinuierlich erfolgen, sobald neue aufbereitete Betriebsparameter verfügbar sind, oder mit einer festgelegten Aktualisierungsrate, beispielsweise alle 10 Sekunden.

Es ist im Sinne der Erfindung bevorzugt, dass die Anzeigenvorrichtung an der Werkzeugmaschine, der Energieversorgungsvorrichtung und/oder an einem externen Gerät angeordnet vorliegt. Wenn die Anzeigenvorrichtung Bestandteil eines externen Geräts ist, ist das externe Gerät neben der Werkzeugmaschine und der Energieversorgungsvorrichtung vorzugsweise auch Bestandteil des vorgeschlagenen Werkzeugsystems. Die Anzeigenvorrichtung kann einen Bildschirm, einen Monitor oder ein Display umfassen oder von einem solchen gebildet werden. Die Anzeigenvorrichtung kann beispielsweise auf einer Oberseite der Werkzeugmaschine angeordnet vorliegen, so dass die Anzeigenvorrichtung vom Nutzer gut einsehbar ist. Selbstverständlich kann die Anzeigenvorrichtung auch an verschiedenen anderen Orten der Werkzeugmaschine angeordnet vorliegen, je nach Beschaffenheit und Ausgestaltung der Werkzeugmaschine. Darüber hinaus kann die Anzeigenvorrichtung auch an der Energieversorgungsvorrichtung angeordnet vorliegen. Wenn die Energieversorgungsvorrichtung mit einer Vorderseite voran in einen Hohlraum der Werkzeugmaschine eingeführt wird, um die Werkzeugmaschine mit elektrischer Energie zu versorgen, kann die Anzeigenvorrichtung beispielsweise auf einer Rückseite der Energieversorgungsvorrichtung angeordnet vorliegen, so dass die Anzeigenvorrichtung vom Nutzer des vorgeschlagenen Werkzeugmaschinensystems gut einsehbar ist. Darüber hinaus kann die Anzeigenvorrichtung an einem externen Gerät angeordnet vorliegen. Das externe Gerät kann beispielsweise ausgewählt sein aus einer Gruppe umfassend mobile Kommunikationsvorrichtung, Notebook, Laptop, Tablet-PC, Heads-UP-Display (HUD), Brille und/oder Schutzbrille. Bei einer mobilen Kommunikationsvorrichtung kann es sich beispielsweise um ein Smart- oder Mobiltelefon handeln. Notebooks, Laptops oder Tablet-PCs können neben einem Nutzer des Werkzeugmaschinensystems aufgestellt werden und sind besonders vorteilhaft aufgrund der Größe ihrer Anzeigenvorrichtung. Bei Heads-UP-Displays, Brillen oder Schutzbrillen können die aufbereiteten Betriebsparameter bzw. die damit verbundenen grafischen Informationen direkt auf eine Fläche der Vorrichtung projiziert werden. Wenn das externe Gerät beispielsweise eine Schutzbrille ist, kann der aufbereitete Betriebsparameter zum Beispiel auf eine Innenseite der Brille projiziert werden, die in Richtung der Augen des Nutzers orientiert ist, wenn die Schutzbrille von dem Nutzer getragen wird. Auf diese Weise kann der aufbereitete Betriebsparameter besonders einfach und unaufwändig in das Sichtfeld des Nutzers eingeblendet werden. Der Nutzer muss dann nicht seinen Kopf wenden, um eine für seine Arbeit wichtige Information zu erfassen, sondern der Nutzer kann den aufbereiteten Betriebsparameter vorteilhafterweise direkt während der Arbeit zur Kenntnis nehmen und berücksichtigen.

Es ist im Sinne der Erfindung bevorzugt, dass die Kommunikationsverbindung mit einem Funkmodul herstellbar ist und/oder auf Bluetooth basiert. Die Kommunikationsverbindung ist insbesondere zwischen der Recheneinheit und der Anzeigenvorrichtung vorgesehen. Insbesondere dann, wenn die Anzeigenvorrichtung an einem externen Gerät angeordnet vorliegt, kann es im Sinne der Erfindung bevorzugt sein, dass die Kommunikationsverbindung drahtlos ausgebildet ist und beispielsweise auf Bluetooth basiert. Beispielsweise kann ein Funkmodul verwendet werden, um eine Kommunikationsverbindung zwischen der Werkzeugmaschine und/oder der Energieversorgungsvorrichtung auf der einen Seite und dem externen Gerät auf der anderen Seite herzustellen. Beispielsweise kann die Werkzeugmaschine und/oder die Energieversorgungsvorrichtung auf der einen Seite, sowie das externe Gerät auf der anderen Seite Transceiver umfassen, die vorzugsweise zum Senden und Empfangen von Informationen eingerichtet sind. Es ist im Sinne der Erfindung ganz besonders bevorzugt, dass die Werkzeugmaschine und/oder die Energieversorgungsvorrichtung einen Sender und das externe Gerät einen Empfänger umfassen. Wenn die Anzeigenvorrichtung Bestandteil der Werkzeugmaschine und/oder der Energieversorgungsvorrichtung ist, kann die Kommunikationsverbindung auch drahtgebunden ausgebildet sein.

Es ist im Sinne der Erfindung bevorzugt, dass das System einen Datenspeicher zur Speicherung der Roh-Betriebsparameter und/oder der aufbereiteten Betriebsparameter umfasst. Der Datenspeicher ermöglicht es vorteilhafterweise, dass Roh- und/oder ganz oder teilweise verarbeitete Daten ab- oder zwischengespeichert werden können. Dadurch kann auf solche ab- oder zwischengespeicherten Daten später zurückgegriffen werden, beispielsweise um diese Daten mit anderen Daten zu kombinieren, um andere oder weitere aufbereitete Betriebsdaten zu ermitteln. Insbesondere vereinfacht die Vorsehung eines Datenspeichers die Auswertung und Verarbeitung der Roh-Daten zu aufbereiteten Daten. Der Datenspeicher kann an der Werkzeugmaschine, an der Energieversorgungsvorrichtung und/oder an dem externen Gerät vorliegen, wobei auch mehr als ein Datenspeicher in dem System vorhanden sein kann. Beispielsweise kann ein erster Datenspeicher in der Werkzeugmaschine vorliegen und ein zweiter Datenspeicher in räumlicher Nähe zu der Anzeigenvorrichtung, beispielsweise in dem externen Gerät. In dem ersten Datenspeicher können Daten abgespeichert werden, die für die Auswertung der Daten benötigt werden oder die Ergebnis der Daten-Verarbeitung sind. In dem zweiten Datenspeicher können die mittels der Kommunikationsverbindung übermittelten aufbereiteten Betriebsparameter abgespeichert werden, beispielsweise bevor sie auf der Anzeigenvorrichtung angezeigt werden, oder danach.

Es ist im Sinne der Erfindung bevorzugt, dass die Recheneinheit dazu eingerichtet ist, im Rahmen der Verarbeitung des Roh-Betriebsparameters Prognosen hinsichtlich des Verhaltens der Werkzeugmaschine und/oder der Energieversorgungsvorrichtung zu ermitteln. Bei diesen Prognosen kann es sich beispielsweise um Reichweite-Analysen oder Berechnungen handeln, also Informationen, die in Bezug auf einen aktuellen Betrieb der Werkzeugmaschine und/oder der Energieversorgungsvorrichtung ermittelt werden und die verwendet werden, um daraus Informationen für den Nutzer abzuleiten. Beispielsweise kann aus einem Energieverbrauch pro bisher durchgeführter Applikation abgeschätzt werden, für wie viele weitere Applikationen die in der Energieversorgungsvorrichtung verbliebende Energie ausreichen wird. Diese Anzahl an noch durchführbaren Applikationen kann dann im Sichtfeld des Nutzers auf der Anzeigenvorrichtung eingeblendet werden.

Es kann im Sinne der Erfindung auch bevorzugt sein, dass die Recheneinheit dazu eingerichtet ist, im Rahmen der Verarbeitung des Roh-Betriebsparameters Handlungsempfehlungen für den Nutzer des Systems zu ermitteln. Dabei kann es sich beispielsweise um Handlungsempfehlungen handeln, die eine Lage und/oder Position der Werkzeugmaschine betreffen. Wenn auf der Anzeigenvorrichtung beispielsweise eine Lage und/oder Position der Werkzeugmaschine angezeigt wird, bei der der Nutzer erkennt, dass sie nicht optimal zur Durchführung der Applikation ist, kann der Nutzer die Lage und/oder Position der Werkzeugmaschine ändern und so das Arbeitsergebnis optimieren. Durch die Anzeige des aufbereiteten Betriebsparameters, der beispielsweise Lage- und/oder Positionsangaben der Werkzeugmaschine umfasst, kann dem Nutzer vorteilhafterweise mehr Informationen an die Hand gegeben werden, als der Nutzer selbst mit seinen Augen wahrnehmen kann. Beispielsweise können kalibrierte oder Referenz-Linien, Wasserwaagedaten oder Winkel auf der Anzeigenvorrichtung angezeigt werden, die der Nutzer nicht ohne Weiteres mit seinen Augen erfassen kann. Auf diese Weise kann die Arbeit des Nutzers mit dem Werkzeugmaschinensystem erheblich komfortabler gestaltet werden und der Nutzer kann die zusätzlichen Informationen, die über die Anzeigenvorrichtung eingeblendet werden, nutzen, um seine Arbeit mit der Werkzeugmaschine zu optimieren.

In einem zweiten Aspekt betrifft die Erfindung ein Verfahren zur Ermittlung und Anzeige von mindestens einem aufbereiteten Betriebsparameter in einem vorgeschlagenen Werkzeugmaschinensystem, wobei das Verfahren durch die folgenden Schritte gekennzeichnet ist:
a) Bereitstellung eines Systems nach einem der vorhergehenden Ansprüche,
b) Ermittlung von mindestens einem Roh-Betriebsparameter durch eine Sensoreinheit des Systems,
c) Übermittlung des von der Sensoreinheit erfassten Roh-Betriebsparameters an eine Recheneinheit innerhalb des Systems,
d) Verarbeitung des Roh-Betriebsparameters durch die Recheneinheit, so dass ein aufbereiteter Betriebsparameter erhalten wird,
e) Übermittlung des von der Recheneinheit erzeugten aufbereiteten Betriebsparameters an eine Anzeigenvorrichtung des Systems durch eine Kommunikationsverbindung,
f) automatische Anzeige des aufbereiteten Betriebsparameters auf der Anzeigenvorrichtung.

Die für das Werkzeugmaschinensystem eingeführten Begriffe, Definitionen und technischen Vorteile gelten vorzugsweise für das Verfahren analog.

Es ist im Sinne der Erfindung bevorzugt, dass der aufbereitete Betriebsparameter in einer grafischen Form und/oder für den Nutzer des Systems schnell erfassbar auf der Anzeigenvorrichtung angezeigt wird. Die schnelle Erfassbarkeit von Daten kann sich insbesondere durch die Aufbereitung der Daten und durch ihre Darstellung in grafischer Form ergeben. Vorzugsweise kann der mindestens eine aufbereitete Betriebsparameter ohne ein Zutun des Nutzers auf der Anzeigenvorrichtung angezeigt werden, wobei die Anzeige ohne ein Zutun des Nutzers im Sinne der Erfindung bevorzugt auch als «automatische Anzeige» bezeichnet wird. Es ist im Sinne der Erfindung bevorzugt, dass im Rahmen der Verarbeitung der Roh-Betriebsparameter durch die Recheneinheit Prognosen hinsichtlich des Verhaltens der Werkzeugmaschine und/oder der Energieversorgungsvorrichtung ermittelt werden können. Darüber hinaus ist es möglich, dass im Rahmen der Verarbeitung der Roh-Betriebsparameter durch die Recheneinheit Handlungsempfehlungen für den Nutzer des Systems ermittelt werden.

Es ist im Sinne der Erfindung bevorzugt, dass die Werkzeugmaschine eine akkubetriebene Werkzeugmaschine ist. Eine akkubetriebene Werkzeugmaschine weist vorzugsweise mindestens einen Akkumulator («Akku») als Energieversorgungsvorrichtung auf, wobei beispielsweise auch zwei oder mehr Akkus vorgesehen sein können. Der Begriff «Werkzeugmaschine» ist im Sinne der Erfindung als typisches Gerät zu verstehen, dass auf einer Baustelle, beispielsweise einer Hochbau-Baustelle und/oder einer Tiefbau-Baustelle, verwendet werden kann. Es kann sich um Bohrhämmer, Meißelgeräte, Kernbohrgerät, Winkel- oder Trennschleifer, Trenngeräte oder dergleichen handeln, ohne darauf beschränkt zu sein. Darüber hinaus können Hilfsgeräte, wie sie gelegentlich auf Baustellen verwendet werden, wie Lampen, Radios, Staubsauger, Meßgeräte, Bau-Roboter, Schubkarren, Transportgeräte, Vorschubvorrichtungen oder andere Hilfsgeräte «Werkzeugmaschine» im Sinne der Erfindung sein. Die Werkzeugmaschine kann insbesondere eine mobile Werkzeugmaschine sein, wobei die vorgeschlagene Energieversorgungsvorrichtung insbesondere auch in stationären Werkzeugmaschinen, wie ständergeführten Bohrgeräten oder Kreissägen, zum Einsatz kommen kann. Bevorzugt sind aber handgeführte Werkzeugmaschinen, die insbesondere akku- oder batteriebetrieben sind.

Weitere Vorteile ergeben sich aus der folgenden Figurenbeschreibung. Die Figur, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In der Figur sind gleiche und gleichartige Komponenten mit gleichen Bezugszeichen beziffert.

Es zeigen:

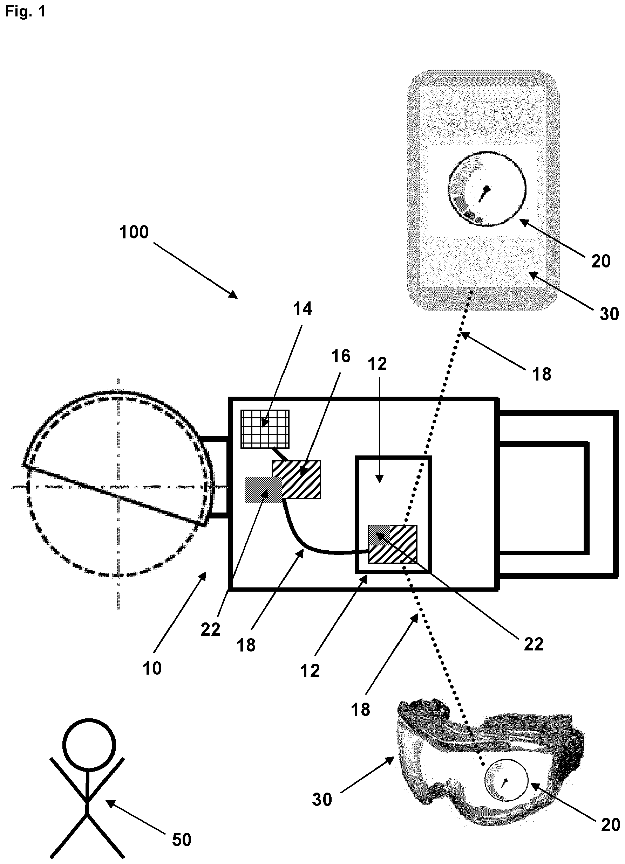

- Fig. 1: schematische Ansicht einer bevorzugten Ausgestaltung des vorgeschlagenen Systems

### Ausführungsbeispiele und Figurenbeschreibung:

Fig. 1 zeigt eine schematische Ansicht einer Werkzeugmaschine 10 mit einer Energieversorgungsvorrichtung 12. Bei der Werkzeugmaschine 10 kann es sich beispielsweise um einen Trennschleifer handeln, der als Werkzeug eine Trennscheibe aufweist. Die Werkzeugmaschine 10 kann einen Griff aufweisen, der beispielsweise als hinterer Handgriff ausgebildet ist. Darüber hinaus kann die Werkzeugmaschine 10 in an sich bekannter weise Bedienelemente, wie Schalter oder Knöpfe, aufweisen. Außerdem kann die Werkzeugmaschine 10 einen Motor (nicht dargestellt) aufweisen, der einen Verbraucher darstellen und von der Energieversorgungsvorrichtung 12 mit elektrischer Energie versorgt werden kann. Es ist im Sinne der Erfindung bevorzugt, dass die Werkzeugmaschine 10 mit der Energieversorgungsvorrichtung 12 ein System 100 bildet.

In dem in Fig. 1 dargestellten Ausführungsbeispiel des Systems 100 weisen sowohl die Werkzeugmaschine 10, als auch die Energieversorgungsvorrichtung 12 eine Recheneinheit 16 auf. Die Recheneinheiten 16 können - wie in Fig. 1 abgebildet - einen Datenspeicher 22 aufweisen oder informationstechnologisch mit einem Datenspeicher 22 verbunden vorliegen. In dem in Fig. 1 dargestellten Ausführungsbeispiel des Systems weist die Werkzeugmaschine 10 eine Sensoreinheit 14 zur Erfassung der Roh-Betriebsdaten auf. Die Sensoreinheit 14 ist dazu eingerichtet, die Roh-Betriebsdaten an die Recheneinheit 16 weiterzuleiten. Dazu kann eine Kommunikationsverbindung 18 zwischen der Sensoreinheit 14 und der Recheneinheit 16 bestehen. Diese Kommunikationsverbindung 18 wird in Fig. 1 durch den kurzen Strich zwischen der Sensoreinheit 14 und der Recheneinheit 16 angedeutet. Es ist im Sinne der Erfindung bevorzugt, dass diese Kommunikationsverbindung 18 drahtgebunden ausgebildet ist. Sie kann aber auch drahtlos ausgebildet sein. Wenn das System 100 zwei Recheneinheiten 16 aufweist, können auch die beiden Recheneinheiten 16 mit einer weiteren Kommunikationsverbindung 18 verbunden sein. Diese Kommunikationsverbindung 18 zwischen den Recheneinheiten 16 kann drahtlos oder drahtgebunden ausgebildet sein.

Die Recheneinheiten 16 können über weitere Kommunikationsverbindungen 18 mit den externen Geräten 30 verbunden vorliegen. Diese Kommunikationsverbindung 18 zwischen den Recheneinheiten 16 und den externen Geräten 30 kann vorzugsweise drahtlos ausgebildet sein. Sie kann beispielsweise Bluetooth-basiert sein.

In dem in Fig. 1 dargestellten Ausführungsbeispiel des Systems 100 sind zwei externe Geräte 30 dargestellt, wobei im oberen Bereich der Fig. 1 eine mobile Kommunikationsvorrichtung als extemes Gerät 30 dargestellt ist und im unteren Bereich eine Schutzbrille als externes Gerät 30.

Die externen Geräte 30 weisen jeweils eine Anzeigenvorrichtung 20 auf, auf der aufbereitete Betriebsparameter in grafischer Form angezeigt werden können. Beispielhafte grafische Formen sind in Fig. 1 dargestellt.

Der Nutzer 50 des Systems 100 kann eine solche Schutzbrille 30 mit Anzeigenvorrichtung 20 tragen oder eine mobile Kommunikationsvorrichtung 30 mit Anzeigenvorrichtung 20 bei sich führen. Der Nutzer 50 kann die Schutzbrille 30 beispielsweise während der Arbeit mit der Werkzeugmaschine 10 tragen und erhält so hilfreiche aufbereitete und in grafischer Form dargestellte Informationen und Daten auf der Anzeigenvorrichtung 20 der Schutzbrille 30 eingeblendet.

Alternativ kann der Nutzer 50 die mobile Kommunikationsvorrichtung 30 in räumlicher Nähe zu seinem Arbeitsbereich platzieren, so dass sich die Anzeigenvorrichtung 20 im Sichtfeld des Nutzers 50 befindet und der Nutzer 50 die auf der Anzeigenvorrichtung 20 eingeblendeten Daten gut sehen kann. Die Anzeigenvorrichtung 20 kann selbstverständlich auch an der Werkzeugmaschine 10 und/oder an der Energieversorgungsvorrichtung 12 angeordnet vorliegen.

### Bezugszeichenliste

- 10: Werkzeugmaschine
- 12: Energieversorgungsvorrichtung
- 14: Sensoreinheit
- 16: Recheneinheit
- 18: Kommunikationsverbindung
- 20: Anzeigenvorrichtung
- 22: Datenspeicher
- 30: externes Gerät
- 50: Nutzer
- 100: System

## Patentansprüche

1. System (100) umfassend eine Werkzeugmaschine (10) und eine Energieversorgungsvorrichtung (12)
**dadurch gekennzeichnet, dass**
das System (100) mindestens eine Sensoreinheit (14) zur Erfassung von mindestens einem Roh-Betriebsparameter des Systems (100) umfasst, wobei der von der Sensoreinheit (14) erfasste Roh-Betriebsparameter an eine Recheneinheit (16) innerhalb des Systems (100) übermittelbar ist, wobei die Recheneinheit (16) dazu eingerichtet ist, den Roh-Betriebsparameter dergestalt zu verarbeiten, dass ein aufbereiteter Betriebsparameter erhalten wird, der mit Hilfe einer Kommunikationsverbindung (18) an eine Anzeigenvorrichtung (20) des Systems (100) übermittelbar ist, wobei die Anzeigenvorrichtung (20) dazu eingerichtet ist, den aufbereiteten Betriebsparameter automatisch und für einen Nutzer (50) des Systems (100) einsehbar anzuzeigen.

2. System (100) nach Anspruch 1
**dadurch gekennzeichnet, dass**
der aufbereitete Betriebsparameter ausgewählt ist aus einer Gruppe umfassend Ladezustand der Energieversorgungsvorrichtung (12), Gesundheitszustand der Energieversorgungsvorrichtung (12), Reichweite der Energieversorgungsvorrichtung (12), Anzahl der mit Energieversorgungsvorrichtung (12) noch zu erledigenden Applikationen, thermische Reichweite der Energieversorgungsvorrichtung (12), Positions- oder Lageangaben zur Werkzeugmaschine (10), Stromverbrauch, Dauer einer Applikation, Anzahl der bisherigen Anwendungen und/oder Abweichung von einer vorgegebenen Lage oder Position.

3. System (100) nach Anspruch 1 oder 2
**dadurch gekennzeichnet, dass**
die Anzeigenvorrichtung (20) an der Werkzeugmaschine (10), der Energieversorgungsvorrichtung (12) und/oder an einem externen Gerät (30) angeordnet vorliegt.

4. System (100) nach einem der vorhergehenden Ansprüche
**dadurch gekennzeichnet, dass**
das externe Gerät (30) ausgewählt ist aus einer Gruppe umfassend mobile Kommunikationsvorrichtung, Notebook, Laptop, Tablet-PC, Heads-UP-Display (HUD), Brille und/oder Schutzbrille.

5. System (100) nach einem der vorhergehenden Ansprüche
**dadurch gekennzeichnet, dass**
die Kommunikationsverbindung (18) mit einem Funkmodul herstellbar ist und/oder auf Bluetooth basiert.

6. System (100) nach einem der vorhergehenden Ansprüche
**dadurch gekennzeichnet, dass**
die Recheneinheit (16) dazu eingerichtet ist, den Roh-Betriebsparameter so zu verarbeiten, dass der aufbereitete Betriebsparameter in einer grafischen Form und/oder für den Nutzer (50) des Systems (100) schnell erfassbar auf der Anzeigenvorrichtung (20) anzeigbar ist.

7. System (100) nach einem der vorhergehenden Ansprüche
**dadurch gekennzeichnet, dass**
der aufbereitete Betriebsparameter ohne ein Zutun des Nutzers (50) auf der Anzeigenvorrichtung (20) angezeigt wird.

8. System (100) nach einem der vorhergehenden Ansprüche
**dadurch gekennzeichnet, dass**
das System (100) einen Datenspeicher (22) zur Speicherung der Roh-Betriebsparameter und/oder der aufbereiteten Betriebsparameter umfasst.

9. System (100) nach einem der vorhergehenden Ansprüche
**dadurch gekennzeichnet, dass**
die Recheneinheit (16) dazu eingerichtet ist, im Rahmen der Verarbeitung des Roh-Betriebsparameters Prognosen hinsichtlich des Verhaltens der Werkzeugmaschine (10) und/oder der Energieversorgungsvorrichtung (12) zu ermitteln.

10. System (100) nach einem der vorhergehenden Ansprüche
**dadurch gekennzeichnet, dass**
die Recheneinheit (16) dazu eingerichtet ist, im Rahmen der Verarbeitung des Roh-Betriebsparameters Handlungsempfehlungen für den Nutzer (50) des Systems (100) zu ermitteln.

11. Verfahren zur Ermittlung und Anzeige von mindestens einem aufbereiteten Betriebsparameter in einem System (100) nach einem der vorhergehenden Ansprüche **gekennzeichnet durch die folgenden Verfahrensschritte:**
a) Bereitstellung eines Systems (100) nach einem der vorhergehenden Ansprüche,
b) Ermittlung von mindestens einem Roh-Betriebsparameter durch eine Sensoreinheit (14) des Systems (100),
c) Übermittlung des von der Sensoreinheit (14) erfassten Roh-Betriebsparameters an eine Recheneinheit (16) innerhalb des Systems (100),
d) Verarbeitung des Roh-Betriebsparameters durch die Recheneinheit (16), so dass ein aufbereiteter Betriebsparameter erhalten wird,
e) Übermittlung des von der Recheneinheit (16) erzeugten aufbereiteten Betriebsparameters an eine Anzeigenvorrichtung (20) des Systems (100) durch eine Kommunikationsverbindung (18),
f) automatische Anzeige des aufbereiteten Betriebsparameters auf der Anzeigenvorrichtung (20).

12. Verfahren nach Anspruch 11
**dadurch gekennzeichnet, dass**
der aufbereitete Betriebsparameter in einer grafischen Form und/oder für den Nutzer (50) des Systems (100) schnell erfassbar auf der Anzeigenvorrichtung (20) angezeigt wird.

13. Verfahren nach Anspruch 11 oder 12
**dadurch gekennzeichnet, dass**
der aufbereitete Betriebsparameter ohne ein Zutun des Nutzers (50) auf der Anzeigenvorrichtung (20) angezeigt wird.

14. Verfahren nach einem der Ansprüche 11 bis 13
**dadurch gekennzeichnet, dass**
im Rahmen der Verarbeitung der Roh-Betriebsparameter durch die Recheneinheit (16) Prognosen hinsichtlich des Verhaltens der Werkzeugmaschine (10) und/oder der Energieversorgungsvorrichtung (12) ermittelt werden.

15. Verfahren nach einem der Ansprüche 11 bis 14
**dadurch gekennzeichnet, dass**
im Rahmen der Verarbeitung der Roh-Betriebsparameter durch die Recheneinheit (16) Handlungsempfehlungen für den Nutzer (50) des Systems (100) ermittelt werden.
